Europäisches Patentamt

European Patent Office

Office européen des brevets

(19)

(11) **EP 1 104 164 A1**

(12) **EUROPÄISCHE PATENTANMELDUNG**

(43) Veröffentlichungstag:
**30.05.2001 Patentblatt 2001/22**

(51) Int Cl.⁷: **H04N 1/04**, G06T 3/40

(21) Anmeldenummer: **00124917.6**

(22) Anmeldetag: **15.11.2000**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **24.11.1999 DE 19956467**

(71) Anmelder: **Wincor Nixdorf GmbH & Co KG**
**33106 Paderborn (DE)**

(72) Erfinder:
- **Rossi, Rainer**
 **33129 Delbrück (DE)**
- **Weiss, Wolfgang**
 **33100 Paderborn (DE)**

(74) Vertreter: **Schaumburg, Thoenes & Thurn**
**Postfach 86 07 48**
**81634 München (DE)**

(54) **Verfahren, Datenverarbeitungsanlage und Programm zum Korrigieren von Abtastfehlern sowie zugehöriges Texterkennungssystem**

(57) Erläutert wird unter anderem ein Verfahren zum Korrigieren von Abtastfehlern, bei dem nach dem Abtastvorgang (Schritt 202) Abtastfehler abhängig von einer Abweichung einer Abtastgeschwindigkeit von einer Soll-Abtastgeschwindigkeit beseitigt werden (Schritt 210).

Fig.5

EP 1 104 164 A1

## Beschreibung

Die Erfindung betrifft ein Verfahren zum Korrigieren von Abtastfehlern, bei dem Bildelemente einer Vorlage nacheinander entlang einer Abtastrichtung mit einer Abtastgeschwindigkeit abgetastet werden. Bei der Abtastung werden Bilddaten mit einer Abtastauflösung in Abtastrichtung erzeugt.

Beim Abtasten wird entweder die Vorlage oder die Abtasteinrichtung bewegt, vgl. beispielsweise Flachbettscanner oder Scanner mit einem Einzug für die Vorlage. Die Relativbewegung zwischen Vorlage und Abtasteinrichtung wird meist mit Hilfe von Motoren erzeugt, insbesondere mit Schrittmotoren. Die Vorlage wird in einer Abtastrichtung abgetastet, die mit der Richtung der Relativbewegung zwischen Vorlage und Abtasteinrichtung übereinstimmt. Diese Abtastrichtung wird auch als Hauptabtastrichtung bezeichnet. Entlang einer quer zur Hauptabtastrichtung liegenden Nebenabtastrichtung werden Zeilen abgetastet. Die Bildelemente einer Zeile werden entweder gleichzeitig, z. B. mithilfe einer Zeile aus Fotodioden, oder ebenfalls nacheinander abgetastet, z. B. unter Verwendung eines Laserscanner mit sich drehendem Polygonspiegel.

Unter Auflösung wird die Anzahl der Bildelemente pro Längeneinheit verstanden. International wird als Bezugslängeneinheit ein Inch verwendet, das heißt 25,4 mm. Die beim Abtasten verwendete Auflösung ist beim Verwenden einer Fotodioden-Zeile in der Nebenabtastrichtung fest vorgegeben. In der Hauptabtastrichtung hängt die Auflösung unter anderem von der Größe der Relativgeschwindigkeit zwischen Vorlage und Abtasteinrichtung ab.

Bei bekannten Abtastverfahren wird die Relativgeschwindigkeit zwischen Vorlage und Abtasteinrichtung werksseitig vorgegeben. Dies erfolgt beispielsweise durch geringe Fertigungstoleranzen oder durch die Justierung. Abtastfehler werden mit Linsensystemen, z. B. mit f-theta-Linsen, oder durch geeignete Maßnahmen bezüglich der Steuerung des Abtastvorgangs vermieden.

Es ist Aufgabe der Erfindung, ein einfaches Verfahren zum Korrigieren von Abtastfehlern anzugeben. Außerdem sollen eine zur Ausführung des Verfahrens geeignete Datenverarbeitungsanlage, ein zur Ausführung des Verfahrens geeignetes Programm sowie ein Texterfassungsystem angegeben werden, in denen das Verfahren verwendet wird.

Die das Verfahren betreffende Aufgabe wird durch ein Verfahren mit den im Patentanspruch 1 angegebenen Verfahrensschritten gelöst. Weiterbildungen sind in den Unteransprüchen angegeben.

Die Erfindung geht von der Erkenntnis aus, daß in den einzelnen Abtastvorrichtungen eine konstante Abtastgeschwindigkeit über das gesamte abzutastende Bild hinweg gewährleistet ist. Jedoch weichen die Abtastgeschwindigkeiten verschiedener Abtastvorrichtungen voneinander ab. Dies ist z. B. auf eine Alterung und einen Verschleiß mechanischer Bauteile sowie auf Toleranzen bei der Herstellung der Abtastvorrichtungen zurückzuführen. Die verwendeten Verfahren zur Bearbeitung der beim Abtasten erzeugten Bilddaten sind jedoch gleich. Somit hat auch die Abtastgeschwindigkeit entscheidenden Einfluß auf die Abtastfehler.

Deshalb werden beim erfindungsgemäßen Verfahren nach dem Abtastvorgang Abtastfehler abhängig von einer Abweichung der Abtastgeschwindigkeit von einer Soll-Abtastgeschwindigkeit beseitigt. Durch diese Maßnahme werden die auf eine unterschiedliche Abtastgeschwindigkeit zurückzuführenden Abtastfehler beseitigt. Auch bei unterschiedlichen Abtastgeschwindigkeiten zwischen verschiedenen Abtastvorrichtungen werden durch die Bilddaten letztlich die gleichen Bilder dargestellt. Bei einer Weiterbearbeitung mit der gleichen Software werden die gleichen Ergebnisse erzielt.

Insbesondere bei einer Bewegung der Vorlage während des Abtastvorgangs sind Abweichungen der Abtastgeschwindigkeit zwischen verschiedenen gleichartig aufgebauten Abtastvorrichtungen nicht zu vermeiden. Beispielsweise verändert sich der Reibwert von Transportrollen, die auf die Oberfläche der Vorlage einwirken zeitabhängig. Durch das erfindungsgemäße Verfahren lassen sich Abtastfehler ausgleichen, die auf solche Ursachen zurückzuführen sind.

Bei einer Ausgestaltung des erfindungsgemäßen Verfahrens werden die Bilddaten so bearbeitet, daß das durch sie dargestellte Bild in Abtastrichtung gestaucht oder gestreckt wird. Wurde die Vorlage aufgrund einer zu großen Relativgeschwindigkeit zwischen Vorlage und Abtastvorrichtung zu schnell abgetastet, so muß das Bild gestreckt werden. Wurde andererseits zu langsam abgetastet, so muß das dargestellte Bild gestaucht werden. Zum Stauchen bzw. Strecken werden die aus der Bildbearbeitungstechnik bekannten Verfahren eingesetzt. Das Stauchen oder Strecken kann jedoch auch durch das Einfügen bzw. Streichen von Zeilen erfolgen, beispielsweise wird jede zehnte Zeile gelöscht.

Bei einer anderen Weiterbildung wird die Auflösung des durch die Bilddaten dargestellten Bildes geändert. Beim Verändern der Auflösung bleiben die Bilddaten selbst unverändert. Dies ist eine sehr einfache Möglichkeit, um die auf die Abweichung der Abtastgeschwindigkeit von der Soll-Abtastgeschwindigkeit zurückzuführenden Abtastfehler zu beseitigen. Die Auflösung ist ein Parameter, der für das gesamte abzutastende Bild gilt. Demzufolge muß nur ein Parameter geändert werden, um die während der gesamten Abtastung entstandenen Abtastfehler zu beseitigen. Das Verändern des Wertes für die Auflösung ist ein sehr zuverlässiger Weg zur Beseitigung sämtlicher Abbildungsfehler, wenn die Abtastgeschwindigkeit während des Abtastens des gesamten Bildes konstant ist und nur zwischen verschiedenen Abtastvorrichtungen unterschiedliche Werte hat.

Bei einer Ausgestaltung wird die Auflösung mittels eines Korrekturfaktors geändert, der ein Maß für die Abweichung der Ausdehnung der Vorlage in Abtastrichtung und der Ausdehnung in Abtastrichtung des durch die Bilddaten dargestellten Bildes bei Abtastauflösung ist. Der Korrekturfaktor berechnet sich bei einer nächsten Ausgestaltung nach der folgenden Formel:

$$KF = LB/L$$

wobei

KF der Korrekturfaktor,
L die Ausdehnung der Vorlage in Abtastrichtung, und
LB die Ausdehnung des durch die Bilddaten dargestellten Bildes in Abtastrichtung sind. Der Korrekturfaktor KF läßt sich mittels einer einzigen Divisionsoperation und somit auf einfache Art berechnen. Der veränderte Wert für die Auflösung ergibt sich durch Multiplikation des Korrekturfaktor KF mit der Abtastauflösung. Die Ausdehnung LB hängt unmittelbar mit der Abtastgeschwindigkeit zusammen.

Ist die Abtastgeschwindigkeit gering, so werden mehr Bildelemente abgetastet. Die Ausdehnung LB ist vergleichsweise groß. Nach der oben angegebenen Formel wird der Korrekturfaktor KF in diesem Fall größer als Eins. Durch das Erhöhen der Auflösung aufgrund des großen Korrekturfaktor KF wird erreicht, daß die Ausdehnung des durch die Bilddaten dargestellten Bildes in Abtastrichtung bei der korrigierten Auflösung verringert wird und der Ausdehnung der Vorlage entspricht. Der durch die Abweichung von Soll-Abtastgeschwindigkeit und Abtastgeschwindigkeit hervorgerufene Abtastfehler ist korrigiert.

Ist die Ausdehnung LB des durch die Bilddaten dargestellten Bildes in Abtastrichtung bei Abtastauflösung kleiner als die Ausdehnung L der Vorlage, so ergibt sich ein Korrekturfaktor KF kleiner als Eins. Die korrigierte Auflösung ist damit kleiner als die Abtastauflösung. Durch die Verkleinerung der Auflösung wird erreicht, daß die Ausdehnung des durch die Bilddaten dargestellten Bildes in Abtastrichtung vergrößert wird und mit der Ausdehnung der Vorlage übereinstimmt. Der auf die Abweichung von Soll-Abtastgeschwindigkeit und Abtastgeschwindigkeit zurückzuführende Abtastfehler ist korrigiert.

Die Ausdehnung L der Vorlage wird beispielsweise durch eine Bedienperson eingegeben oder mit einem geeigneten Verfahren ermittelt. Angewendet werden Verfahren zum Erfassen der Länge der gesamten Vorlage oder der Länge einer auf der Vorlage angeordneten Markierung. Ein einfacher Weg zum Bestimmen der Ausdehnung der Vorlage besteht darin, die Ausdehnung an Hand der Ausdehnung des durch die Bilddaten dargestellten Bildes in Abtastrichtung abzuschätzen. Dabei wird von vorgegebenen Ausdehnungen für die Vorlage diejenige Ausdehnung ausgewählt, die von der Ausdehnung des abgetasteten Bildes in Abtastrichtung und bei Abtastauflösung am wenigsten abweicht.

Bei einer Weiterbildung des erfindungsgemäßen Verfahrens werden die von Abtastfehlern freien Bilddaten mit einem Verfahren zum Erkennen von Zeichen bearbeitet. Beim Durchführen des Erkennungsverfahrens werden die zu erkennenden Zeichen an vorgegebenen Längenkoordinaten gesucht. Bei dieser Weiterbildung läßt sich die Erkennungsrate erheblich erhöhen, weil das eingesetzte Erkennungsverfahren empfindlich auf Abweichungen der zu erkennenden Zeichen von ihren vorgegebenen Positionen reagiert. Eine hohe Erkennungsrate ist nur gewährleistet, wenn die zu erkennenden Zeichen exakt an ihren vorgegebenen Koordinaten positioniert sind. Dies läßt sich durch das Korrigieren der Abtastfehler erreichen, die auf eine von der Soll-Abtastgeschwindigkeit abweichenden Abtastgeschwindigkeit zurückzuführen sind.

Die Erfindung betrifft außerdem eine Datenverarbeitungsanlage zum Korrigieren von Abtastfehlern, eine Texterfassungseinrichtung sowie ein Programm zum Korrigieren von Abtastfehlern. In der erfindungsgemäßen Datenverarbetunganlage und in der erfindungsgemäßen Texterfassungseinrichtung wird das erfindungsgemäße Verfahren bzw. werden dessen Weiterbildungen durchgeführt. Auch das Programm dient zur Durchführung des erfindungsgemäßen Verfahrens bzw. dessen Weiterbildungen. Somit gelten die oben angegebenen technischen Wirkungen auch für die Datenverarbeitungsanlage, die Texterfassungseinrichtung und das Programm.

Im folgenden werden Ausführungsbeispiele der Erfindung an Hand der beiliegenden Zeichnungen erläutert. Darin zeigen:

Figur 1    eine Texterfassungseinrichtung,

Figur 2    eine abzutastende Vorlage,

Figur 3    das Bild einer zu langsam abgetasteten Vorlage,

Figur 4    das Bild einer zu schnell abgetasteten Vorlage, und

Figur 5    ein Flußdiagramm mit Verfahrensschritten zum Korrigieren von Abtastfehlern.

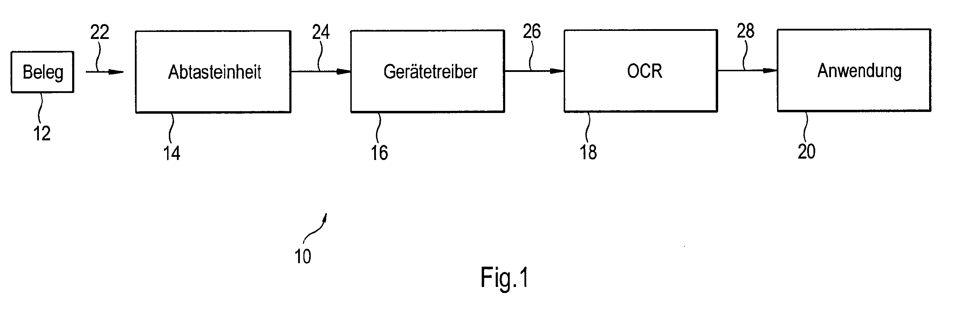

Figur 1 zeigt eine Texterfassungseinrichtung 10 zum Erfassen des auf einem Beleg 12 dargestellten Textes. Die Texterfassungseinrichtung 10 enthält eine Abtasteinheit 14, einen Gerätetreiber 16, ein Texterkennungsprogramm 18 sowie ein Anwendungsprogramm 20.

Die Abtasteinheit 14 dient zum Abtasten des Belegs 12, vgl. Pfeil 22. Die Abtasteinheit 14 enthält eine handelsübliche Abtastvorrichtung, z. B. einen Einzugsscanner, der mit einer Auflösung von 300 dpi (dots per inch) den Beleg 12 abtastet. Das bedeutet, daß 300 Bildelemente, z. B. Bildpunkte, auf einer Strecke von 25,4 mm abgetastet werden. Die Abtasteinheit 14 erzeugt ein sogenanntes Pixelbild, bei dem die Bildelemente matrixförmig angeordnet sind. Bilddaten 24 des Pixelbildes werden von der Abtasteinheit 14 an den Gerätetreiber 16 übertragen.

Der Gerätetreiber 16 enthält ein Programm, das aus den Bilddaten 24 eine Bilddatei 26 erzeugt. Die Bilddatei 26 enthält neben den Bilddaten u.a. Angaben über die Größe des Bildes in horizontaler x-Richtung und vertikaler y-Richtung. Der Gerätetreiber 16 dient außerdem zur Ansteuerung der Abtasteinheit 14 auf von einer Bedienperson erzeugte Befehle hin. Die Bilddatei 26 wird vom Gerätetreiber 16 an das Texterkennungsprogramm 18 übergeben.

Das Texterkennungsprogramm 18 bearbeitet die vom Gerätetreiber 16 übergebene Bilddatei 26 und wandelt Zeichen in vorgegebenen Feldern in Textzeichenketten 28 um. Beispielsweise wird aus dem Bild des Buchstabens "A" der hexadezimale Wert "30" erzeugt, welcher dem Buchstaben "A" zugeordnet ist. Die so codierten Textzeichen 28 werden an das Anwendungsprogramm 20 übergeben. Das Texterkennungsprogramm 18 wird englisch auch als "optical character recognition" Programm bezeichnet, abgekürzt OCR-Programm.

Im Anwendungsprogramm 20 werden die Textdaten ausgewertet, indem z. B. Überweisungen ausgeführt werden. Dabei werden Gelder auf verschiedenen Konten verbucht.

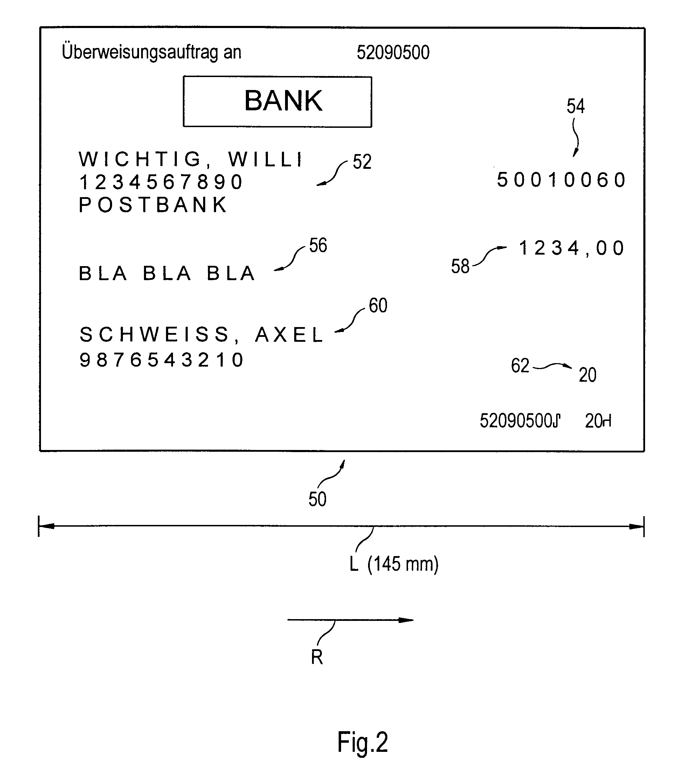

Figur 2 zeigt eine abzutastende Vorlage 50, für ein Überweisungsformular mit Lesefeldern 52 bis 62. In den Lesefeldern 52 bis 60 sind handschriftliche Angaben eingetragen, die für ein Überweisungsformular erforderlich sind. Die Lesefelder 52 bis 60 enthaltenen in dieser Reihenfolge Angaben zum Überweisungsempfänger, zur Bankleitzahl des Überweisungsempfängers zum Überweisungsgrund, zum Überweisungsbetrag sowie zum Auftraggeber der Überweisung. In einem Lesefeld 62 ist der Wert 20 angegebenen. Anhand dieses Wertes ist das Texterfassungsprogramm 18, vgl. Figur 1, in der Lage, die Positionen der Lesefelder 52 bis 60 aus einer Tabelle abzulesen.

Die Vorlage 50 hat in einer Abtastrichtung R eine vorgegebene Länge L, von beispielsweise 145 mm. Die Länge L ist für alle Überweisungsformulare eines bestimmten Typs gleich.

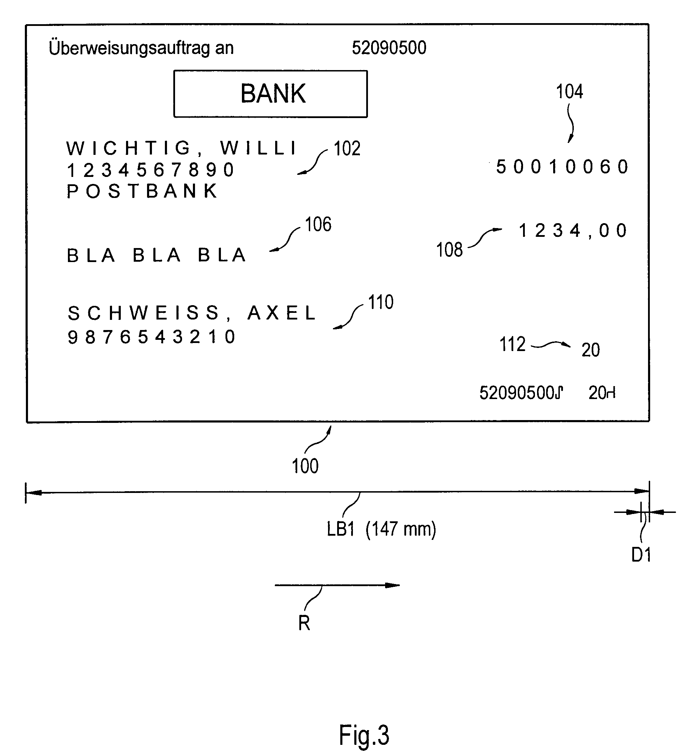

Figur 3 zeigt das Bild 100 einer zu langsam abgetasteten Vorlage 50. Das Bild 100 der Vorlage 50, vgl. Figur 2, hat in Abtastrichtung eine Länge LB1 = 147 mm, die länger als die Länge L der Vorlage 50 ist. Die Länge LB1 ist um einen Differenzbetrag D1 = 2mm länger als die Länge L. Somit ist das Bild 100 im Vergleich zur Vorlage 50 gestreckt. Bildausschnitte 102 bis 112 entsprechen in dieser Reihenfolge den Lesefeldern 52 bis 62. Aufgrund der Streckung des Bildes 100 weichen die Positionen der Bildausschnitt 102 bis 112 im Bild 100 von den Sollpositionen der Lesefelder 52 bis 62 in der Vorlage 50 ab. Die Abweichung der Positionen ist bei den zuletzt abgetasteten Lesefelder 54, 58 und 62 bzw. bei den entsprechenden Bildausschnitten 104, 108 und 112 größer als bei den Bildausschnitten 102, 106 und 110. Dies ist darauf zurückzuführen, daß sich die auf die zu langsame Abtastung zurückzuführenden Abtastfehler summieren.

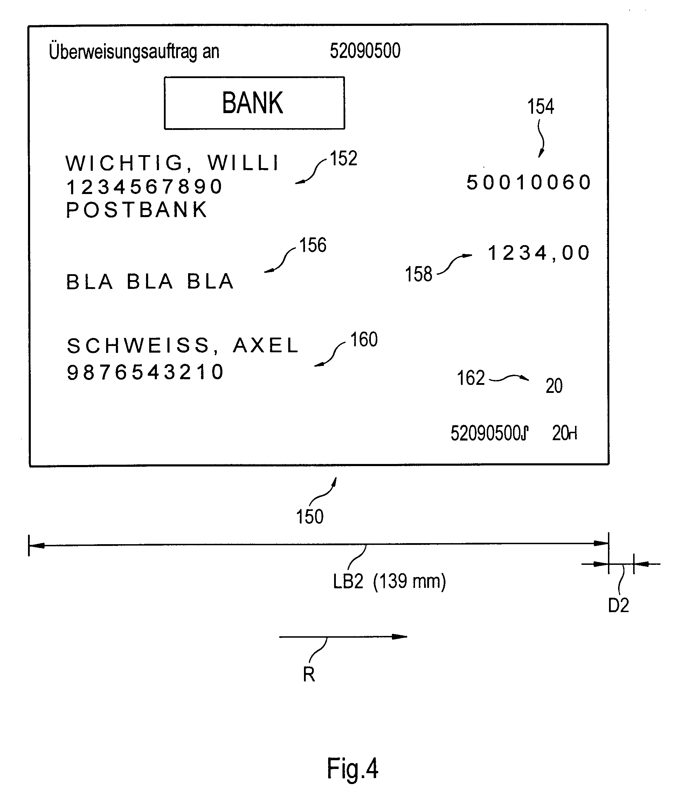

Figur 4 zeigt ein Bild 150 einer zu schnell abgetasteten Vorlage 50, vgl. Figur 2. Aufgrund der zu schnellen Abtastung enthält das Bild 150 weniger Bildelemente als ein Bild, das mit der Soll-Abtastgeschwindigkeit von der Vorlage 50 erzeugt worden ist. Dadurch ist das Bild 150 im Vergleich zur Vorlage 50 gestaucht.

Das Bild 150 hat eine Länge LB2 in Abtastrichtung R von beispielsweise 139 mm. Damit ist die Länge LB2 um einen Differenzbetrag D2 = 6 mm kürzer als die Länge L der Vorlage 50.

Bildausschnitte 152 bis 162 sind Bilder der Lesefelder 52 bis 62. Aufgrund des zu schnellen Abtastvorgangs weichen die Positionen der Lesefelder 152 bis 162 im Bild 150 von den durch die Lesefelder 52 bis 62 vorgegebenen Positionen in der Vorlage 50 ab. Die Bilder 154, 158 und 162 der zuletzt abgetasteten Lesefelder 54, 58 und 62 liegen erheblich näher am linken Rand des Bildes 150 als die Lesefelder 54, 58 und 62 am Rand der Vorlage 50. Auch bei einer zu schnellen Abtastung kommt es zu einer Summierung der Abtastfehler während der Abtastung.

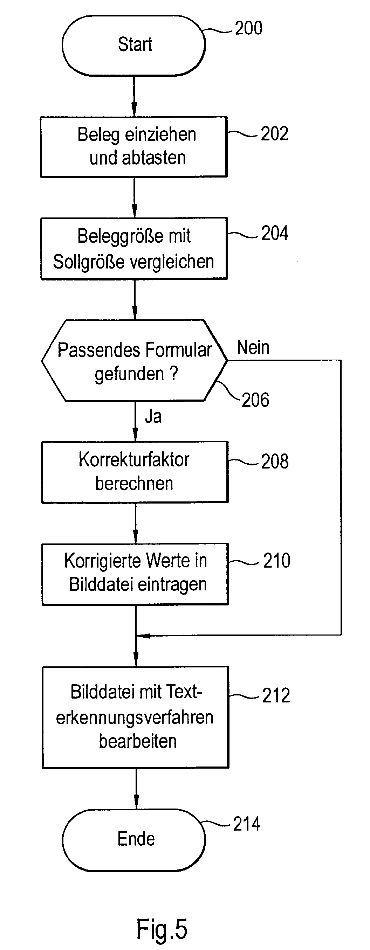

Figur 5 zeigt ein Flußdiagramm mit Verfahrensschritten zum Korrigieren von Abtastfehlern, die auf Geschwindigkeitsabweichungen während des Abtastvorgangs zurückzuführen sind. Beim Erläutern der Figur 5 wird auch auf die Figuren 1 bis 4 Bezug genommen.

Das Verfahren beginnt in einem Verfahrensschritt 200. Die Vorlage 50 wird von einer Bedienperson in den Einzugsschacht der Abtasteinheit 14 eingelegt.

In einem folgenden Verfahrensschritt 202 veranlaßt die Bedienperson das Einziehen der Vorlage 50 durch die Übermittlung eines Befehls an den Gerätetreiber 16. Die Abtasteinheit 14 tastet die Vorlage 50 ab. Die Abtastgeschwindigkeit hängt von den werksseitigen Einstellungen der Abtasteinheit ab. Außerdem ändert sich die Abtastgeschwindigkeit durch den Verschleiß der Abtasteinheit 14.

Abweichungen der Abtastgeschwindigkeit von einer Soll-Abtastgeschwindigkeit führen zu unterschiedlichen Längen der beim Abtasten erzeugten Bilder, vgl. das zu lange Bild gemäß Figur 3 und das zu kurzer Bild gemäß Figur 4. Im Verfahrensschritt 204 wird eine Länge des beim Abtasten erzeugten Bildes ermittelt. Die Länge wird mit einer Solllänge verglichen. Sind Sollgrößen von beispielsweise 135 mm für ein erstes Überweisungformular und 145 mm für das Überweisungsformular gemäß Vorlage 50 vorgegeben, so wird eine Länge und damit eine Vorlage gewählt, die am wenigsten von der ermittelten Länge abweicht. Dies ist im Ausführungsbeispiel die Vorlage 50.

In einem folgenden Verfahrensschritt 206 wird geprüft, ob eine Vorlage im Verfahrensschritt 204 ermittelt werden konnte. Ist dies der Fall, folgt unmittelbar nach dem Verfahrensschritt 206 ein Verfahrensschritt 208. Konnte aufgrund einer zu großen Abweichung von den vorgegebenen Sollgrößen im Verfahrensschritt 204 keine geeignete Vorlage ermittelt werden, so folgt nach dem Verfahrensschritt 206 unmittelbar ein unten noch erläuterter Verfahrensschritt 212.

Wurde im Verfahrensschritt 204 eine geeignete Vorlage bestimmt, so wird im Verfahrensschritt 208 ein Korrekturfaktor KF nach der folgenden Formel ermittelt:

$$KF = LB/L,$$

wobei KF der Korrekturfaktor,
LB die Ausdehnung des durch die beim Abtasten erzeugten Bilddaten dargestellten Bildes in Abtastrichtung, und
L die Ausdehnung der im Verfahrensschritt 204 ermittelten Vorlage in Abtastrichtung sind. Bei dem anhand der Figur 3 erläuterte Bild 100 gilt für den Korrekturfaktor KF = LB1/L = 1,018. Für das anhand der Figur 4 erläuterte Bild 150 ergibt sich ein Korrekturfaktor KF= LB2/L = 0,959.

Nach dem Verfahrensschritt 208 folgt ein Verfahrensschritt 210, in welchem korrigierte Werte für die Auflösung der vom Gerätetreiber 16 erzeugten Bilddatei 26 berechnet werden. Dabei wird die Abtastauflösung mit dem im Verfahrensschritt 208 ermittelten Korrekturfaktor KF multipliziert, um den korrigierten Wert für die Auflösung zu erhalten. Für das Bild 100 gemäß Figur 3 ergibt sich eine korrigierte Auflösung von 300 dpi * 1,018 = 304 dpi. Für das anhand der Figur 4 erläuterte Bild 150 gilt: 300 dpi * 0,959 = 288 dpi.

Nach dem Verfahrensschritt 210 folgt ein Verfahrensschritt 212. Der Verfahrensschritt 212 wird auch unmittelbar nach dem Verfahrensschritt 206 ausgeführt, wenn im Verfahrensschritt 204 keine geeignete Vorlage ermittelt werden konnte. Im Verfahrensschritt 212 wird die Bilddatei 26 mit Hilfe des Texterkennungsprogramms 18 bearbeitet. Für die Auflösung des Bildes wird entweder der im Verfahrensschritt 210 ermittelte Wert verwendet oder der Wert der Abtastauflösung von 300 dpi verwendet. Durch die im Verfahrensschritt 210 ausgeführte Korrektur kann die Erkennungsrate des Texterkennungsprogramms 18 gesteigert werden.

In einem Verfahrensschritt 214 wird das Verfahren beendet. Die im Verfahrensschritt 212 erkannten Zeichen können nun vom Anwendungsprogramm 20 bearbeitet werden.

Bei einem anderen Ausführungsbeispiel wird eine Korrektur der Auflösung in x-Richtung und in y-Richtung durchgeführt. Es werden zwei Korrekturfaktoren KF ermittelt, mit denen sowohl die Auflösung in x-Richtung als auch die Auflösung in y-Richtung korrigiert werden.

**Bezugszeichenliste**

| | |
|---|---|
| 10 | Texterfassungseinrichtung |
| 12 | Beleg |
| 14 | Abtasteinheit |
| 16 | Gerätetreiber |
| 18 | Texterkennungsprogramm |
| 20 | Anwendungsprogramm |
| 22 | Pfeil |
| 24 | Bilddaten |
| 26 | Bilddatei |
| 28 | Zeichenkette |
| 50 | Vorlage |
| 52 bis 62 | Lesefeld |
| L, LB1, LB2 | Länge |
| 100 | Bild der Vorlage |
| 102 bis 108 | Bildausschnitt |
| D1 | Differenzwert |
| 150 | Bild der Vorlage |
| 152 bis 162 | Bildausschnitt |
| D2 | Differenzwert |
| 200 | Start |
| 202 | Beleg einziehen und abtasten |
| 204 | Bildgröße mit Sollgröße vergleichen |
| 206 | passendes Formular gefunden? |
| 208 | Korrekturfaktor berechnen |
| 210 | korrigierte Auflösung in Bilddatei eintragen |
| 212 | Bilddatei mit Texterkennungsverfahren bearbeiten |
| 214 | Ende |
| R | Abtastrichtung |

**Patentansprüche**

1.　Verfahren zum Korrigieren von Abtastfehlern,

bei dem Bildelemente einer Vorlage (50) nacheinander entlang einer Abtastrichtung (R) mit einer Abtastgeschwindigkeit abgetastet werden,

bei der Abtastung Bilddaten (24) mit einer Abtastauflösung in Abtastrichtung (R) erzeugt werden,

und bei dem nach dem Abtastvorgang Abtastfehler abhängig von einer Abweichung (D1, D2) der Abtastgeschwindigkeit von einer Soll-Abtastgeschwindigkeit beseitigt werden.

2. Verfahren nach Anspruch 1, **dadurch gekennzeichnet,** daß die Bilddaten (24) so bearbeitet werden, daß das durch sie dargestellte Bild (100, 150) in Abtastrichtung (R) gestaucht oder gestreckt wird (Schritte 208, 210).

3. Verfahren nach Anspruch 1 oder 2, **dadurch gekennzeichnet,** daß die Auflösung des durch die Bilddaten (24) dargestellten Bildes (100, 150) verändert wird (Schritt 210),
und daß beim Verändern der Auflösung die Bilddaten (24) unverändert bleiben.

4. Verfahren nach Anspruch 3, **dadurch gekennzeichnet,** daß die Auflösung mittels eines Korrekturfaktors geändert wird, der ein Maß für die Abweichung der Ausdehnung der Vorlage (50) in Abtastrichtung (R) zur Ausdehnung des durch die Bilddaten (24) dargestellten Bildes (100, 150) in Abtastrichtung (R) ist.

5. Verfahren nach Anspruch 4, **dadurch gekennzeichnet,** daß sich der Korrekturfaktor (KF) nach der folgenden Formel berechnet:

$$KF = LB/L,$$

wobei

KF der Korrekturfaktor,
LB die Ausdehnung des durch die Bilddaten (26) dargestellten Bildes (100, 150) in Abtastrichtung (R) bei Abtastauflösung, und
L die Ausdehnung der Vorlage (50) in Abtastrichtung (R) sind.

6. Verfahren nach Anspruch 5, **dadurch gekennzeichnet,** daß ein Wert für die Ausdehnung (L) der Vorlage (50) in Abtastrichtung (R) von einer Bedienperson vorgegeben wird,

oder daß die Ausdehnung (L) der Vorlage (50) in Abtastrichtung (R) erfaßt wird,

oder daß die Ausdehnung (L) der Vorlage (50) mittels eines Vergleichs der Ausdehnung (LB) des Bildes (100, 150) bei Abtastauflösung mit Vorgabewerten für die Ausdehnung (L) der Vorlage (50) ermittelt wird (Schritt 204).

7. Verfahren nach einem der Ansprüche 3 bis 6, **dadurch gekennzeichnet,** daß die Auflösung nur einmal pro abgetasteten Bild (100, 150) verändert wird.

8. Verfahren nach einem der vorhergehenden Ansprüche, **dadurch gekennzeichnet,** daß die von Abtastfehlern freien Bilddaten (26) mit einem Verfahren zum Erkennen von Zeichen bearbeitet werden (Schritt 212),
und daß das Erkennen der Zeichen mithilfe von vorgegebenen Längenkoordinaten durchgeführt wird, an denen ein zu erkennendes Zeichen gesucht werden soll.

9. Datenverarbeitungsanlage (10) zum Korrigieren von Abtastfehlern,

mit einem Speicher zum Speichern einer Befehlsfolge,

einem Prozessor zum Ausführen der Befehle der Befehlsfolge,

**dadurch gekennzeichnet,** daß während des Ausführens der Befehlsfolge beim Erzeugen von Bilddaten (24, 26) mittels aufeinanderfolgender Abtastung einer Vorlage (50) auftretende Abtastfehler abhängig von einer Abweichung der Abtastgeschwindigkeit von einer Soll-Abtastgeschwindigkeit ausgeglichen werden.

10. Texterfassungseinrichtung (10),

mit einer Abtasteinrichtung (14) zum Abtasten der Bildelemente einer Vorlage entlang einer Abtastrichtung (R) und zum Erzeugen von Bilddaten,

einer Datenverarbeitungsanlage, die während des Ausführens einer Befehlsfolge beim Erzeugen von Bilddaten (24, 26) mittels aufeinanderfolgender Abtastung einer Vorlage (50) auftretende Abtastfehler abhängig von einer Abweichung der Abtastgeschwindigkeit von einer Soll-Abtastgeschwindigkeit ausgleicht,

und mit einer Texterfassungseinheit (18), die Zeichen an vorgegebenen Positionen des durch die Bilddaten (26) dargestellten Bildes (100, 150) erkennt.

11. Programm zum Korrigieren von Abtastfehlern, mit einer durch den Prozessor einer Datenverarbeitungsanlage (10) ausführbaren Befehlsfolge, **dadurch gekennzeichnet,** daß die Datenverarbeitungsanlage (10) während des Ausführens der Befehlsfolge veranlaßt wird, beim Erzeugen von Bilddaten (24, 26) mittels aufeinanderfolgender Abtastung von Bildelementen einer Vorlage (50) entlang einer Abtastrichtung (R) auftretende Abtastfehler abhängig von einer Abweichung der Abtastgeschwindigkeit von einer Soll-Abtastgeschwindigkeit

auszugleichen.

Fig.1

Überweisungsauftrag an                    52090500

| BANK |

WICHTIG, WILLI          ⌐52
1 2 3 4 5 6 7 8 9 0                                    54

POSTBANK                                                5 0 0 1 0 0 6 0

                        ⌐56
BLA  BLA  BLA                        58⌐  1 2 3 4 , 0 0

                        ⌐60
SCHWEISS,  AXEL
9 8 7 6 5 4 3 2 1                              62⌐  20

                                          52090500♪   20H

                        50

|←————————————————————————————————————→|

L (145 mm)

————————————————→

R

Fig.2

Überweisungsauftrag an       52090500

BANK

104

W I C H T I G ,   W I L L I   102

1 2 3 4 5 6 7 8 9 0

P O S T B A N K

5 0 0 1 0 0 6 0

106

B L A   B L A   B L A

108    1 2 3 4 , 0 0

S C H W E I S S ,   A X E L   110

9 8 7 6 5 4 3 2 1 0

112   20

52090500♪   20⊣

100

LB1 (147 mm)     D1

R

Fig.3

Überweisungsauftrag an          52090500

BANK

WICHTIG, WILLI          152
1234567890
POSTBANK

154

50010060

156

BLA BLA BLA          158          1234,00

SCHWEISS, AXEL          160
9876543210

162          20

52090500♪    20H

150

LB2 (139 mm)          D2

R

Fig.4

```
        ┌─────────────┐
        │    Start    │──── 200
        └─────────────┘
               │
               ▼
    ┌────────────────────┐
    │   Beleg einziehen   │──── 202
    │   und abtasten      │
    └────────────────────┘
               │
               ▼
    ┌────────────────────┐
    │   Beleggröße mit    │──── 204
    │ Sollgröße vergleichen│
    └────────────────────┘
               │
               ▼
      ╱─────────────────╲           Nein
     ╱  Passendes Formular ╲─────────────┐
     ╲   gefunden ?       ╱              │
      ╲─────────────────╱ ── 206        │
               │ Ja                      │
               ▼                         │
    ┌────────────────────┐               │
    │   Korrekturfaktor   │──── 208      │
    │   berechnen         │              │
    └────────────────────┘               │
               │                         │
               ▼                         │
    ┌────────────────────┐               │
    │  Korrigierte Werte in │── 210       │
    │  Bilddatei eintragen │              │
    └────────────────────┘               │
               │◄────────────────────────┘
               ▼
    ┌────────────────────┐
    │  Bilddatei mit Text-│──── 212
    │  erkennungsverfahren │
    │  bearbeiten         │
    └────────────────────┘
               │
               ▼
        ┌─────────────┐
        │    Ende     │──── 214
        └─────────────┘
```

Fig.5

Europäisches
Patentamt

**EUROPÄISCHER RECHERCHENBERICHT**

Nummer der Anmeldung

EP 00 12 4917

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 293 432 A (GONSER KARL E ET AL) 8. März 1994 (1994-03-08) * Zusammenfassung * * Abbildungen 1-3 * * Spalte 1, Zeile 1 - Spalte 2, Zeile 25 * * Spalte 4, Zeile 34 - Zeile 37 * * Anspruch 1 * --- | 1-11 | H04N1/04 G06T3/40 |
| A | US 5 053 885 A (TELLE LAWRENCE B) 1. Oktober 1991 (1991-10-01) * Zusammenfassung * * Spalte 2, Zeile 14 - Spalte 3, Zeile 15 * * Anspruch 1 * ----- | 1-11 | |

**RECHERCHIERTE SACHGEBIETE (Int.Cl.7)**

H04N
G06T

Der vorliegende Recherchenbericht wurde für alle Patentansprüche erstellt

| Recherchenort | Abschlußdatum der Recherche | Prüfer |
|---|---|---|
| DEN HAAG | 16. März 2001 | Stoffers, C |

**ANHANG ZUM EUROPÄISCHEN RECHERCHENBERICHT
ÜBER DIE EUROPÄISCHE PATENTANMELDUNG NR.**

EP 00 12 4917

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-03-2001

| Im Recherchenbericht angeführtes Patentdokument | Datum der Veröffentlichung | Mitglied(er) der Patentfamilie | Datum der Veröffentlichung |
|---|---|---|---|
| US 5293432 A | 08-03-1994 | KEINE | |
| US 5053885 A | 01-10-1991 | DE 69025751 D | 11-04-1996 |
| | | DE 69025751 T | 26-09-1996 |
| | | EP 0455771 A | 13-11-1991 |
| | | JP 4503292 T | 11-06-1992 |
| | | JP 3123609 B | 15-01-2001 |
| | | WO 9108639 A | 13-06-1991 |

EPO FORM P0461

Für nähere Einzelheiten zu diesem Anhang : siehe Amtsblatt des Europäischen Patentamts, Nr.12/82